# EUROPEAN PATENT SPECIFICATION

(11) **EP 4 194 718 B1**
(45) Date of publication and mention of the grant of the patent: **24.07.2024**
(21) Application number: 21383129.0
(22) Date of filing: 10.12.2021
(51) Int. Cl.: F16H 59/10, F16H 59/02

(54) **GEARSHIFT DEVICE FOR A VEHICLE TRANSMISSION**
GANGSCHALTVORRICHTUNG FÜR EIN FAHRZEUGGETRIEBE
DISPOSITIF DE CHANGEMENT DE VITESSES POUR TRANSMISSION DE VÉHICULE

(43) Date of publication of application: 14.06.2023
(73) Proprietor: Fico Triad, S.A., 08028 Barcelona (ES)
(72) Inventor: MORENO COLOM, Javier, Viladecavalls (Barcelona) (ES)
(74) Representative: Bardehle Pagenberg S.L.

(56) References cited:
- EP-A1- 3 453 925
- EP-B1- 2 636 926
- DE-A1- 102007 032 545
- DE-B3- 102006 021 078
- JP-A- H02 275 176

## Description

### TECHNICAL FIELD

The present invention relates to gearshift devices for vehicle transmissions.

### BACKGROUND

A vehicle transmission or "gearbox" is configured to transfer the power produced by an engine to the drive wheels of the vehicle. A vehicle transmission enables adjusting the gear ratio between the wheels and the engine as the vehicle slows down or speeds up. A driver of a vehicle can use a shifter device to change gears i.e. change the gear ratio between an input gear connected to the engine side and an output gear connected to the wheels side.

The gearshift device may be a shift-by-wire device. A shift-by-wire device may be configured to establish different transmission modes, e.g. driving modes such as "drive", "park", "reverse" or "neutral", and transmit these electronically to a control unit. Therefore, no or very few mechanical connections are necessary between the gearshift device and the transmission.

A gearshift device generally comprises a lever configured to pivot about a pivoting axis and a sensor configured to indirectly or directly detect movements of the lever. A driver may therefore move the lever, and the sensor may detect that the position of the lever has changed. This change in position may be indicated to the vehicle control unit and/or vehicle transmission so that the vehicle may be driven according to the transmission mode signaled by the driver. A "transmission mode" as used throughout the present disclosure may refer to a driving mode such as "park", "reverse", "neutral" etc. but also to the selection of a specific gear.

In addition to a lever, known gearshift devices can include user operable buttons, e.g. push-buttons for the selection of a desirable transmission mode. The user operable buttons may act in a vertical direction, whereas the pivoting axis of the lever may be horizontal. In other words, the pivoting axis of the lever can be perpendicular to the actuation direction of the user operable buttons.

The sensor may be attached to an electronics support, e.g. to a printed circuit board (PCB). The electronics support may comprise one or more PCBs. Nowadays, a sensor that is often used for detecting a change in position of the lever is a Hall effect sensor. Other types of sensors exist. For example, contact sensors exist. However, as a contact sensor requires contact for sensing, it may wear out quickly. Therefore, as a large number of measurements in the gearshift device may be required during the life service of a vehicle, other type of sensors such as Hall effect sensors are generally used.

A Hall effect sensor is generally capable of accurately determining the position of the gear lever and Hall effect sensors are generally also robust and have a sufficiently long service life. Such a sensor may however be expensive, especially when mass-producing the sensors. Also, the associated required software may be complex, in particular for 3D Hall sensors.

An example of a gearshift device for an automotive transmission comprising a Hall sensor is provided in document EP 2 636 926 B1.

Some known gearshift devices comprise two printed circuit boards (PCB's) or electronics supports for detecting the transmission mode selected by a driver. One PCB may be arranged to detect movement of the user operable buttons and a second PCB may be arranged to detect movements of the lever.

### SUMMARY

According to the present invention, a gearshift device for a vehicle transmission is provided, which comprises a gear selector operable by a user to control the vehicle transmission, a housing, a sensor actuator and an electronics support. The sensor actuator comprises a housing end, a gear selector end and a sensor end, wherein the gear selector end is configured to be moved by the gear selector such that the sensor actuator rotates about a sensor actuator axis when the gear selector is operated by a user. The housing end is configured to secure the sensor actuator to the housing. The electronics support comprises a sensor including a fixed portion with an opening and a movable portion configured to rotate in the opening, wherein the movable portion comprises a sensor contact surface.

The sensor end of the sensor actuator is at least partially arranged within the opening of the sensor and the sensor end is configured to rotate within the opening of the sensor about the sensor actuator axis. The sensor end of the sensor actuator comprises an actuator contact portion configured to engage the sensor contact surface and move the movable portion of the sensor when the sensor actuator rotates about the sensor actuator axis. The sensor actuator axis is defined between the housing end and the sensor end of the sensor actuator in the opening of the sensor.

One or more outer surfaces of the sensor end configured to contact the sensor are curved in a plane containing the sensor actuator axis.

According to the present invention, the gearshift device is provided such that when a user (driver) changes the transmission mode by moving the gear selector, this moves the sensor actuator, and the movement of the sensor actuator may be detected by a sensor. Such a gearshift is relatively robust. Because of the rounded surfaces of the sensor end, undesired movements and moments about axes other than the sensor actuator axis can be absorbed without damaging the sensor actuator or the sensor.

The sensor actuator axis defines the axis of the rotation of the sensor actuator. A plurality of longitudinal (substantially vertical) planes may be defined which contain the sensor actuator axis. The intersection of the sensor end with one or more of these planes is curved to absorb the aforementioned undesired movements or moment. In other words, one or more outer surfaces of the sensor end configured to contact the sensor are curved (not straight) in a direction substantially parallel to the sensor actuator axis.

The sensor actuator may be defined between the housing end of the sensor actuator and a geometric center of the opening of the sensor. In examples, and depending on the manufacturing the sensor actuator axis may be substantially vertical between the housing end and the geometric center of the opening of the sensor.

In some examples, the gearshift device may further comprise user operable buttons for selecting a transmission mode, in addition to the gear selector. The sensor actuator may have a rotational axis that can be parallel to a direction of actuation of user operable buttons. In examples, a single PCB (or electronics support) may be used for detection of both actuation of the buttons and the gear selector.

In some examples, all the outer surfaces of the sensor end configured to contact the sensor are curved in planes containing the sensor actuator axis. I.e. the surfaces that are substantially parallel to the sensor actuator axis (they extend in a generally vertical direction) are not straight in these examples.

In some examples, the actuator contact portion comprises a convex actuator contact surface. A convex outer surface allows a rotational movement about axes transverse to the sensor actuator axis without excessive contact (and wear) between the sensor actuator and the sensor.

In some examples, an edge of the sensor end that is opposite to the actuator contact surface is convex, and a radius of curvature of the actuator contact surface is different than a radius of curvature of the opposite edge. The sensor actuator may be eccentrically positioned with respect to a geometric center of the opening of the sensor. In order to allow (limited) rotation about axes transverse to the sensor actuator rotation axis in this eccentric arrangement, the curvature of the edges may be different. The curvature of the edges may be measured in a cross-section of the sensor actuator with a vertical plane including the rotational axis of the sensor actuator.

In examples, the actuator contact portion comprises two or more contact points configured to engage the sensor contact surface. The actuator contact portion may be designed in a variety of ways including e.g. a number of predefined contact points, a contact surface, or a straight line forming the contact portion.

In some examples, the sensor may comprise a potentiometer. In spite of their low cost, potentiometers have been scarcely used in the prior art in gearshift devices because of a limited technical lifetime. In examples of the present disclosure, wear of the sensor can be avoided or reduced and the lifetime of the sensor extended.

In some examples, the gear selector may be a lever configured to rotate about a lever axis. Optionally, the lever may have an integrated pivoting pin configured to be arranged in the housing between a first and a second wall of the housing. Optionally, the first wall may be a sidewall of the housing and the second wall may be an inner wall of the housing. Integration of the pivoting pin allows a reduction of the number of parts and facilitates assembly.

In some examples, the housing may comprise a top cover and a bottom cover. The pivoting pin of the lever may be supported by the top cover only. This can help to keep tolerances within desired ranges. The movement of the lever may be more stable if it is supported by a same cover than by two separate covers, e.g. two lateral covers.

The top cover may comprise the first and the second walls supporting the pivoting pin of the lever. Optionally, the top cover may comprise an inner wall supporting the pivoting pin of the lever. In examples, the bottom cover may comprise a stiffening element configured to support the inner wall of the housing. The design of the housing in these examples may be adapted to be able to absorb loads that are introduced by the pivoting pin and avoid deformation of the housing. The stiffening elements may be understood as elements configured to be in contact or come into contact with the top cover and thus restrict the movement of the top cover in one or more directions.

### BRIEF DESCRIPTION OF THE DRAWINGS

Non-limiting examples of the present invention, which is defined by the appended claims, will be described in the following, with reference to the appended figures, in which:
Figures 1A schematically illustrates a perspective view of an inside of a gearshift device for a vehicle transmission according to the present invention.
Figures 1B and 1C schematically illustrate different perspective views of an outside of the gearshift device of figure 1A.
Figures 2A and 2B schematically illustrate examples of a perspective view and a lateral view, respectively, of a sensor actuator for a gearshift device according to the present invention.
Figure 3 schematically shows another perspective view of an inside of the gearshift device of figures 1A-1C.
Figures 4A and 6 schematically illustrate two different cross-sectional views of an example of the sensor end of the sensor actuator of figures 2A and 2B introduced into a sensor of an example of a gearshift device for a vehicle transmission according to the present invention.
Figure 4B schematically illustrates a bottom view of an example of a sensor end of the sensor actuator introduced into a contact sensor of a gearshift device for a vehicle transmission according to the present invention.
Figure 5 schematically illustrates a cross-sectional view of the gearshift device of figures 1A-1C.
Figures 7A and 7B schematically illustrate a perspective view of an inside of an example of a top cover for a gearshift device according to the present invention and a perspective view of an inside and an outside of the same top cover, respectively.
Figure 8 schematically illustrates a perspective view of an example of a bottom cover for a gearshift device for a vehicle transmission according to the present invention.

The figures refer to example implementations and are only be used as an aid for understanding the claimed subject matter, not for limiting it in any sense.

### DETAILED DESCRIPTION OF EXAMPLES

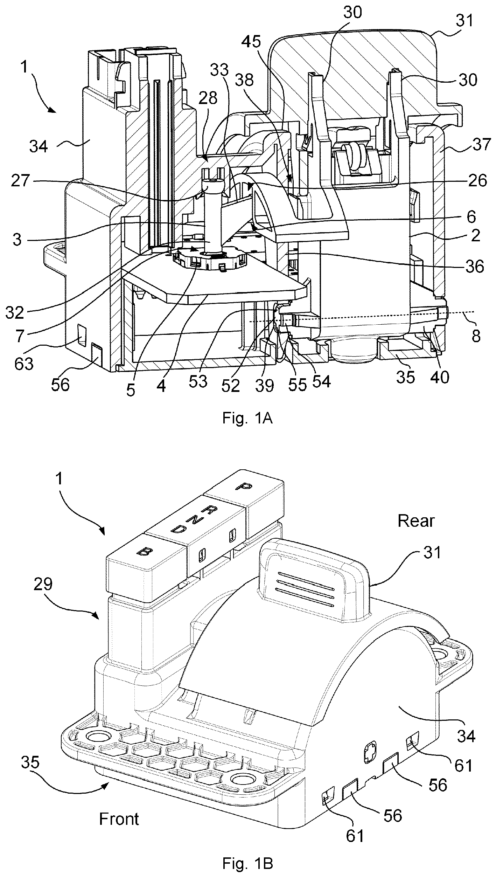

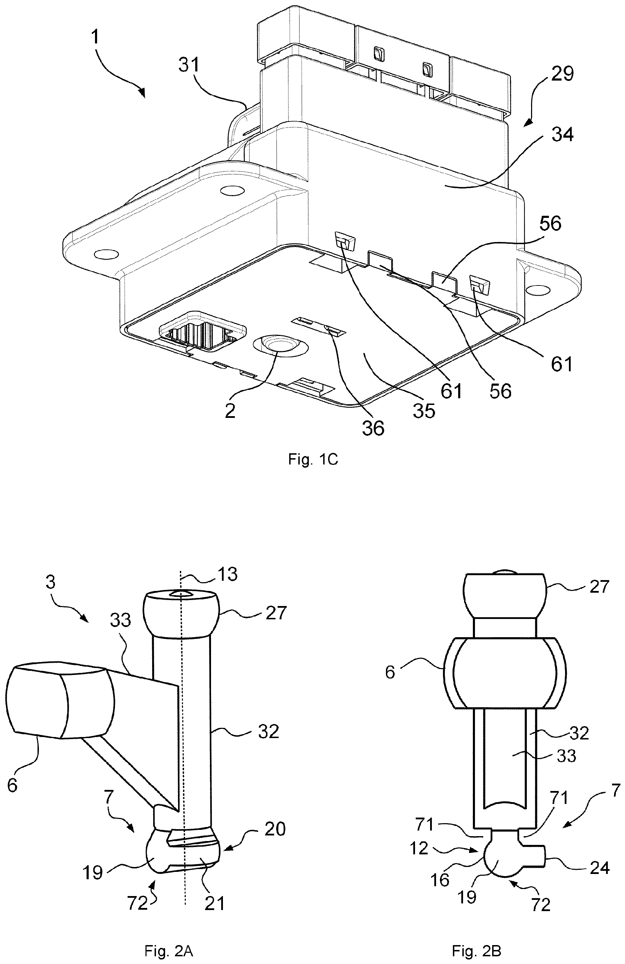

Figure 1A shows a perspective view of an example of an inside portion of a gearshift device 1 for a vehicle transmission. Figures 1B and 1C illustrate different outside views of the same assembled gearshift device. In particular, figure 1B illustrates a top frontal view, and figure 1C illustrates a bottom rear view of the gearshift device.

Figures 1A, 1B and 1C illustrate a handle or knob 31 which a driver may hold to change a transmission mode. The handle 31 in this example may be part of a lever, which is used as a gear selector, i.e. as an element that a driver can use to determine a suitable gear or transmission mode. The handle 31 may in particular be clipped to a remainder of the lever. In other examples, the handle may be integrally formed with a remainder of the lever. In yet other examples, other gear selectors instead of levers may be used.

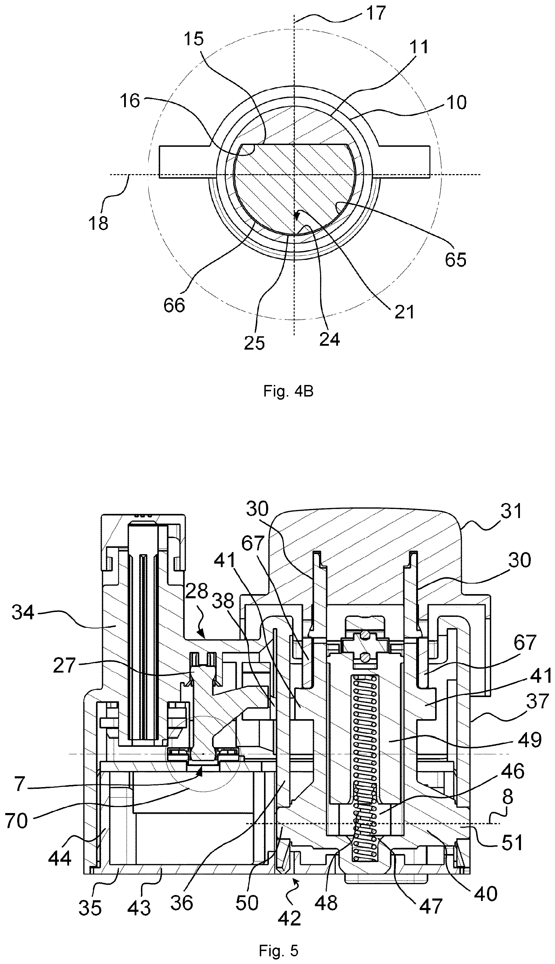

The driver may rotate the lever about an axis of rotation 8, as schematically illustrated in figures 1A and 5. As may be seen in figure 1B, the gearshift device may include suitable indications for a user (e.g. "P" for park, "R" for reverse etc.) to enable a user to select the desired transmission mode.

In order to properly control the vehicle and change the transmission mode in accordance with the driver's request, the position of the lever or another gear selector inside the gearshift device 1 needs to be accurately and reliably detected. In examples disclosed herein, the position of the lever is indirectly detected i.e. the lever acts on a sensor actuator 3 (see figure 1A) and the orientation, movement or position of the sensor actuator 3 is then determined, which then provides information on the driver's gear selection.

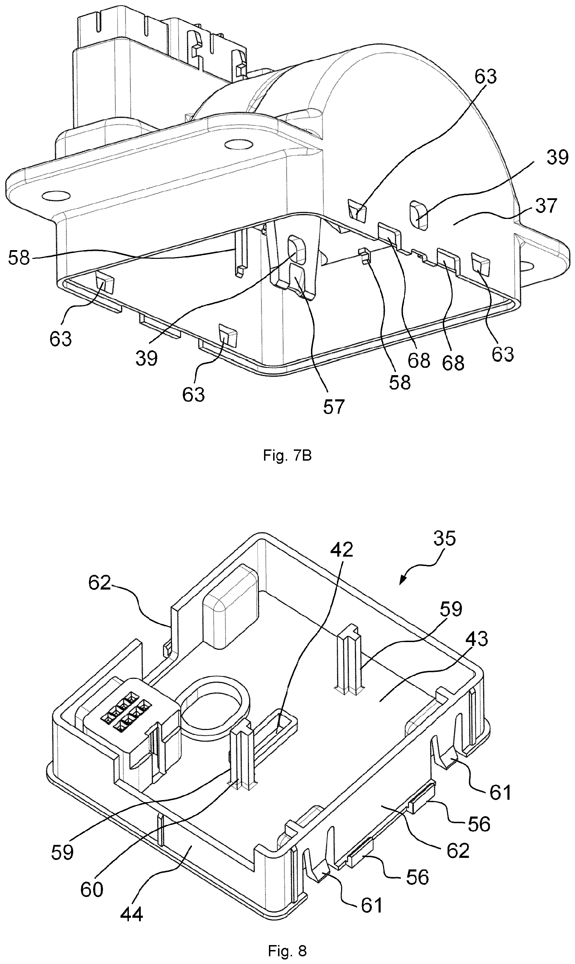

In the example illustrated in figures 1B and 1C, a housing 29 of the gearshift device 1 may include a top cover 34 and a bottom cover 35 which are assembled to form the housing. The top cover 34 and bottom cover 35 may be snap fitted together. The bottom cover 35 in this example includes some tabs 61 that may be received in suitable receptacles or openings 63 of the top cover 34 to snap fit the two parts 34, 35 together, see also figures 7B and 8.

Additionally or alternatively, the top cover 34 may comprise protrusions or tabs that may be received in suitable receptacles in the bottom cover 35 (not shown).

In the example of figures 1A-1C, the bottom cover 35 also comprises ribs 56 configured to avoid, or at least minimize, an outward curving of the top cover 34. The ribs 56 may also reinforce the retaining effect of the tabs 61. The top cover 34 may comprise recesses 68 configured to mate with the ribs 56 (see also e.g. figure 8). In other examples, if ribs 56 are present, they may be provided in the top cover 34.

A gearshift device 1 as described in accordance with this example may be assembled without fasteners or fixing elements such as screws, nuts and similar pieces. The device 1 may accordingly be simpler and easier to assemble.

The housing 29 may accommodate and protect e.g. electronics, sensor components and other. In this example, particularly, the housing may accommodate part of the lever 2, an electronics support 4, a sensor 5, and a sensor actuator 3.

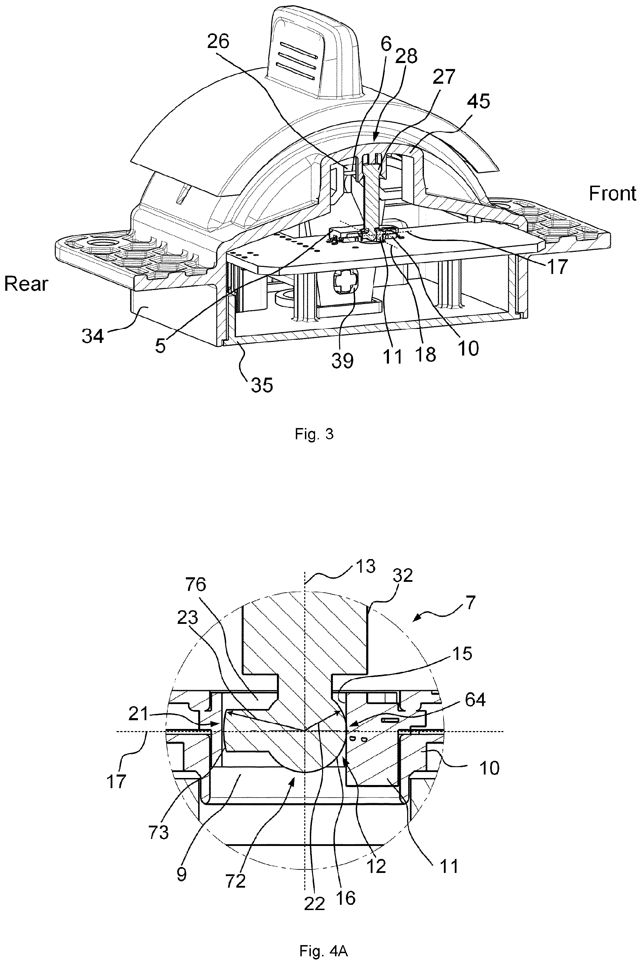

Figure 1A provides a perspective view of a mechanism inside the housing. Figures 2A and 2B schematically illustrate examples of a perspective view and a lateral view, respectively, of a sensor actuator 3 for a gearshift device 1, e.g. for the gearshift device 1 of figure 1. Figure 3 schematically shows a perspective lateral view of an inside of the gearshift device 1 of figures 1A-1C including the sensor actuator 3 of figures 2A and 2B.

According to the present invention, a gearshift device 1 for a vehicle transmission is provided. The gearshift device comprises a gear selector 2 operable by a user to control the vehicle transmission. In this case, the gear selector 2 is a lever.

The gearshift device further comprises a sensor actuator 3 comprising a gear selector end 6 (more readily visible in figures 2A and 2B) and a sensor end 7, wherein the gear selector end 6 is configured to be moved by the gear selector 2 such that the sensor actuator 3 rotates about a sensor actuator axis 13 (see e.g. figure 2A) when the gear selector 2 is operated by a user. E.g. when a driver moves the handle 31, the lever 2 rotates about the pivot axis 8 indicated in figure 1A. As the lever 2 rotates, so does the sensor actuator 3 because the gear selector end 6 of the sensor actuator is driven or forced to another position by the movement of the lever 2.

In the examples shown, the sensor actuator axis 13 is defined between the sensor end 7 and a housing end 27 of the sensor actuator 3. The sensor actuator axis 13 may be substantially vertical between the housing end 27 and a geometric center of the opening of the sensor, if manufacturing tolerances allow.

In the examples shown, the sensor actuator axis 13 coincides with a central longitudinal axis of a sensor shaft portion 32 connecting the housing end 27 and the sensor end 7 of the sensor actuator 3.

In other examples, instead of a shaft portion, other shapes or elements may be provided. The actuator axis 13 and an element connecting the sensor end 7 and another suitable end, e.g. the housing end 27, of the sensor actuator 3, may not coincide. For example, such an intermediate element may be curved, and e.g. may have a C-shape or an S-shape. Other shapes are also possible.

The gearshift device 1 of this example further comprises an electronics support 4 comprising a sensor 5 including a fixed portion 10 with an opening and a movable portion 11 configured to rotate in the opening, wherein the movable portion 11 comprises a sensor contact surface 15, see also for example figures 4A and 4B.

Figure 4A schematically illustrates a cross-sectional view of a cross-section along a vertical plane with the sensor end 7 of the sensor actuator 3 arranged within an opening of the contact sensor 5 of the gearshift device 1 of figure 3. Figure 4B illustrates a cross-sectional view of a cross-section with a horizontal plane.

In figure 4A, axis 18 (illustrated in figure 4B) is perpendicular to the plane of the figure. Figure 4B schematically illustrates a bottom view of the sensor end 7 of the sensor actuator 3 introduced into the contact sensor 5 of the gearshift device 1 of figure 3. In figure 4B, axis 13 (illustrated in figure 4A) is perpendicular to the plane of the figure.

The sensor end 7 of the sensor actuator 3 is at least partially arranged within the opening 9 of the sensor 5 and the sensor end 7 is configured to rotate within the opening of the sensor 5 about the sensor actuator axis 13. The sensor end 7 is thus adapted to the shape of the opening of the sensor and configured to rotate within this opening 9.

The sensor end 7 of the sensor actuator comprises an actuator contact portion 12 that is configured to engage the sensor contact surface 15 and move the movable portion 11 of the sensor 5 when the sensor actuator 3 rotates about the sensor actuator axis 13. I.e. when a driver wishes to change the transmission mode of the vehicle and moves the gear set member (in this case lever 2), this is detected by the position or displacement (and in this example in particular, a rotation) of the sensor actuator 3 in the opening of sensor 5.

One of the functions of the sensor actuator 3 in this example is to act as a multiplier. I.e. if the lever is rotated by x degrees, the sensor actuator is moved by more than x degrees. It is advantageous to use sensors that allow a relatively large range of rotations. This allows defining wider detection "zones" or "ranges" corresponding to different transmission modes and can compensate or absorb manufacturing tolerances and other imprecisions.

One or more surfaces of the sensor end 7 that are configured to contact the sensor are curved. In particular, the surfaces may be curved in a direction substantially parallel to the sensor actuator axis. In other words, the surfaces may be curved along a substantially vertical direction.

In accordance with said invention, the sensor and sensor actuator assembly are more robust. Ideally, only moments about a vertically aligned sensor actuator axis 13 would be experienced by the sensor actuator, but in practice certain moments about axes 17, 18 transverse to the vertical axis cannot be avoided, see e.g. figures 3-4B. The curved surfaces enable small rotations about these axes without causing significant wear of the sensor or sensor actuator. Different sensors may be used, such as e.g. contact sensors including potentiometers, while maintaining a sufficient lifetime for the sensor.

Due to inevitable manufacturing tolerances, it may happen that the housing end 27 of the sensor actuator 3 is not perfectly vertically aligned with a geometric center of the opening of the sensor 5. In other words, the sensor actuator axis 13 is not exactly vertical. When rotation of the sensor actuator 3 occurs as a driver changes the transmission mode, the rotation of the sensor actuator 3 is thus not about a vertical axis perpendicular to the opening of the sensor, but instead may have components along axes perpendicular to this vertical axis. The curved surfaces allow for such components without excessively damaging the sensor actuator 3 or the sensor 5. The lifetime of sensors 5 may thus be extended.

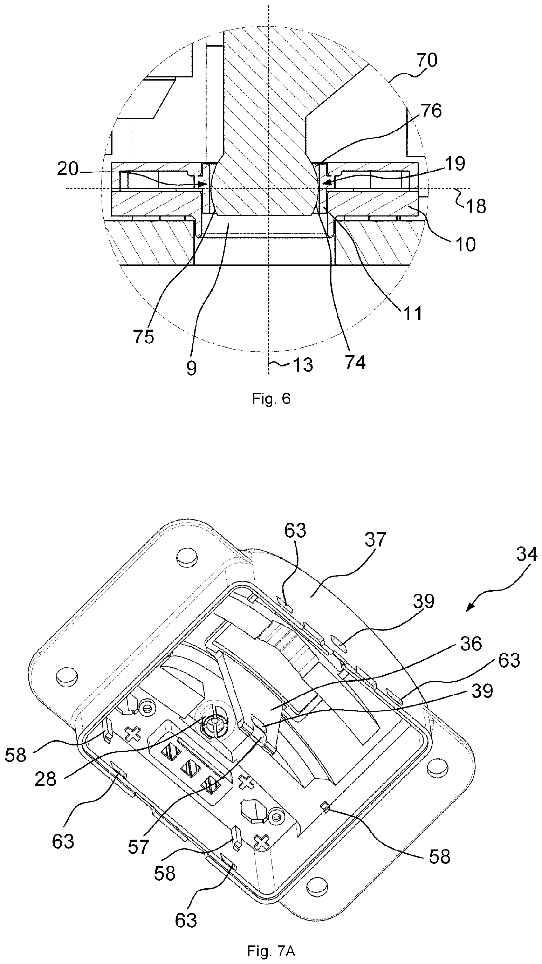

Figure 5 schematically illustrates a lateral cross-section of the gearshift device 1 of figures 1A-1C. Figure 6 illustrates an enlarged cross-sectional view of the sensor end 7 of the sensor actuator 3 of figure 5. In particular, figure 6 shows the portions enclosed by circle 70 in figure 5 enlarged. In figures 5 and 6, axis 17 is perpendicular to the plane of the figures.

The lever 2, the sensor actuator 3, the contact sensor 5 and the electronics support 4 may be accommodated in a housing 29. The lever 2 may comprise two projections 30, e.g. top projections, protruding out of the housing 29. A knob or handle 31 may be secured to the projections 30 of the lever 2 such that e.g. a driver may push and pull the handle 31 and thereby cause the lever 2 to rotate around the pivoting axis 8 of the lever 2. For instance, an inner portion of the handle 31 may have two recesses, each recess being configured to receive a free end of the projections 30 of the lever 2.

In some examples, the sensor actuator 3 may further comprise a housing end 27, see e.g. figures 1A, 3 and 5. The housing end 27 may be configured to be secured to an inner portion 28, e.g. a top inner portion, of the housing. The inner portion 28 of the housing 29 may be configured to secure the housing end 27 of the sensor actuator 3. This portion 28 may in some examples be configured such that the housing end 27 of the sensor actuator 3 may be clipped to it, see e.g. figures 1A, 3 and 5. In some examples, the inner portion 28 configured to receive the housing end 27 of the sensor actuator 3 is comprised in a top cover 34 of the housing 29, see e.g. figure 1A.

In some examples, the actuator contact portion 12 (i.e. the portion of the sensor actuator that engages the sensor contact surface 15 is, or comprises, a convex actuator contact surface 16, see figure 4A. The convex actuator surface 16 enables some rotation about axes that do not coincide with the vertical axis as explained before.

In examples, all the edges or surfaces of the sensor end 7 configured to contact the sensor are curved. In particular, it may be seen in figure 4A that an edge 73 that is opposite to the actuator surface 16 may be curved, and more particularly may be convex as well. In figure 6 it may be seen that opposite side edges 74 and 75 may be curved, and more particularly convex as well.

In some examples, the sensor actuator 3 may comprise a shaft 32 between the gear selector end 6 and the sensor end 7, optionally between the sensor end 7 and the housing end 27, see e.g. figures 2A and 2B. The sensor actuator 3 may further comprise a web 33 for connecting the shaft portion 32 to the gear selector end 6.

In the illustrated example, the sensor actuator 3 further comprises a recess 71 between the shaft portion 32 and the sensor end 7, see e.g. the view of figure 2B. Between the shaft portion 32 and the sensor end 7, a cut-out or recess 71 is foreseen to locally reduce the thickness of the sensor actuator 3. This recess or cut-out 71 may allow some rotation of the sensor actuator 3 about axes 17, 18 that do not coincide with the vertical axis. The sensor actuator 3 does not touch the inner edges or surfaces of the sensor 5 in this case.

The fixed portion 10 of the contact sensor 5 may have an opening 9, see e.g. figure 4A. The movable portion 11 may be rotatably placed inside opening 9. In some other examples, the movable portion 11 may comprise a hole 76, e.g. a through-hole or a blind hole, receiving the sensor end 7 of the sensor actuator 3. In some examples, the surface 15 of the movable portion 11 which the sensor end 7 of the sensor actuator is to push may be substantially flat, see figure 4B.

In the examples of e.g. figures 2A, 2B and 4A, the sensor end 7 comprises a rounded bottom portion 72. In other examples, the bottom of the sensor end 7 may have a different shape. For instance, the sensor end 7 may have a substantially flat surface (not shown).

The actuator contact portion 12 of the sensor end 7 of the sensor actuator 3 herein comprises a contact surface 16 configured to touch and move, e.g. push, the sensor contact surface 15. It may be sufficient that only a portion of the contact surface 16 contacts the sensor contact surface 15 at a certain moment in time.

In some examples, the actuator contact portion 12 may comprise two or more contact points 64 configured to touch and move, e.g. push, the sensor contact surface 15. Two or more contact points may enhance the control of the movement of the movable portion 11. The two or more contact points may contact the sensor contact surface 15 at different times in some examples. For instance, the actuator contact surface 16 may touch the sensor contact surface 15 with one or more contact points 64 when rotating the sensor contact surface 15 in one direction, and the actuator contact surface 16 may touch the sensor contact surface 15 with one or more contact points 64 when rotating the sensor contact surface 15 in an opposite direction. In some examples, the actuator contact surface 16 may be configured to touch the sensor contact surface 15 along a line, e.g. a substantially straight line, see figure 4B.

The sensor end 7 is rotatable around a sensor actuator axis 13, see e.g. figures 2A, 4A and 6. The rotation of the sensor end 7 about this axis of rotation 13 allows moving the movable portion 11 of the sensor by touching, e.g. pushing, the sensor contact surface 15 of portion 11 of the contact sensor 5. Two further axes substantially perpendicular to the main vertical axis of rotation and between them may be defined for the sensor end 7: a first axis 18 and a second axis 17, see e.g. figure 3.

A first axis 18 may be substantially parallel to the sensor contact surface 15 of the movable portion 11 of the contact sensor 5 in some examples and perpendicular to the main vertical axis of rotation 13 of the sensor actuator. The second axis 17 may be substantially perpendicular to main vertical axis of rotation 13 and the first axis 18. The second axis 17 may be substantially perpendicular to the sensor contact surface 15, see figure 4B. Ideally, the sensor end 7 of the sensor actuator 3 would only rotate around the main vertical axis of rotation 13. However, as explained before, it can happen that undesirable rotations around other axes also occur when the lever 2 moves the sensor actuator 3.

The sensor end 7 of the sensor actuator 3 may further comprise a portion 21 opposite the actuator contact surface 16 having a convex surface 24. This opposite surface 24 may be configured to face a lateral inner wall 25 of the contact sensor, see figure 4B. A convex surface 24 of the opposite portion 21 may further help to increase the life service of the contact sensor 5.

A radius of curvature 22 of the contact surface 16 and a radius of curvature of the opposite surface 24 may be adapted to a geometry, e.g. size and shape, of the sensor 5, see e.g. figure 4A. These radii 22, 23 may be measured in a cross-section including the sensor actuator axis 13 and the first axis 17. Radii 22 and 23 may be measured from the second axis 18, which in figure 4A is perpendicular to the plane of the figure.

In some examples, a radius of curvature 22 of the contact surface 16 may be between 0.5 mm and 1.5 mm. In some examples, a radius of curvature 23 of the opposite surface 24 may be between 1.5 mm and 2.5 mm. In some of these examples, for instance in the example of figure 4A, the radius of curvature 22 of the contact surface 16 may be about 1 mm, and the radius of curvature 23 of the opposite surface 24 may be about 1.95 mm. These values may be particularly suitable for avoiding, or at least reducing, damage to the contact sensor 5 and therefore increasing its service life.

In some examples, the sensor end of the sensor actuator 7 may comprise convex surfaces 19, 20 in a vertical direction with a constant radius of curvature, see figure 6. Similarly as explained above, rounding the portions of the sensor end 7 which are opposite to each other along the first axis 18 may help to accommodate rotations about the second axis 17 and therefore to reduce damage to the contact sensor 5.

Opposite convex surfaces 19, 20 may be doubly curved surfaces, see figure 2A and figure 6. The surface 24 of the sensor end 7 opposite the contact surface 16 may also be a doubly curved surface, see figure 2B and figure 4.

In some examples, the sensor end 7 of the sensor actuator 3 may have a shape of a truncated disc in a cross-section substantially perpendicular to the sensor axis of rotation 13, see figure 4B. A disc cross-section of the sensor end 7 can ensure the position of the sensor actuator 3 in the opening of the sensor 5 and the rotation of the sensor actuator in the opening. In other examples, other shapes may be possible. A cross-sectional shape of the sensor end 7 (in a plane perpendicular to the main axis of rotation 13) may be selected depending on a shape of a sensor opening and a shape of the movable portion of the sensor.

In some examples, the sensor end 7 of the sensor actuator 3 comprises two lateral surfaces: the contact surface 16 and a follower surface 65, see figure 4B. As already indicated, the contact surface 16 is configured to touch and move the sensor contact surface 15 of the contact sensor 5. The follower surface 65 is configured to face a remaining lateral inner surface 66 of the contact sensor 5 and includes the surface 24 opposite the contact surface 16. In some examples, the follower surface 65 may be convex in order to accommodate residual rotations around the first and/or second axes. The follower surface 65 may be a doubly curved surface.

In some examples, a size and shape of the sensor end 7 of the sensor actuator 3 may be adapted to be fitted in the opening 9 of the contact sensor 5, in particular in an cross-section comprising the first 18 and second 17 axes. This may help to move the movable portion 12 of the sensor 5 in a suitable manner while avoiding or at least reducing damage to the sensor 5.

In some examples, the sensor 5 may be a contact sensor, and in some examples may comprise a potentiometer.

In some examples, a surface of an electronics carrier 4 may be substantially parallel to the pivoting axis 8 of the lever 2. I.e., the axis of rotation 13 of the sensor actuator 3 may be substantially perpendicular to the axis of rotation 8 of the lever 2, see e.g. figures 1A, 3 and 5. This facilitates the use of a single electronics carrier that is configured to detect both movement of the sensor actuator 3 and a movement of the buttons indicated in figure 1B. In other examples, the main axis of rotation 13 of the sensor actuator 3 and the axis of rotation 8 of the lever 2 may have other angles between them.

In some examples, the lever 2 may have an opening 26 for receiving the gear selector end 6 of the sensor actuator 3, see e.g. figures 1A and 3. The lever 2 may be configured to directly move the gear selector end 6 of the sensor actuator 3. I.e., intermediate pieces between the lever 2 and the gear selector end 6 may be avoided. In other examples, one or more intermediate connecting elements may be provided. The lever 2 and the gear selector end 6 of the sensor actuator 3 would be indirectly connected in these examples.

In some examples, the sensor actuator 3 may comprise at least two main body portions 32, 33: a shaft portion 32 and a web portion 33, see e.g. figures 1A and 2A. The web portion 33 connects the gear selector end 6 to the shaft portion 32. The shaft portion 32 may connect the sensor end 7 to the housing end 27. The shaft portion 32 may extend substantially along a straight line between the housing end 27 and the sensor end 7.

The contact sensor 5 may be attached to the electronics support 4 such that the opening 9 of the sensor 5 is vertically aligned with the inner portion 28 of the housing 29 to which the housing end 27 of the sensor actuator 3 is secured. The housing end 27 and the inner portion 28 of the housing 29 may form a ball joint.

The lever 2 may comprise an inner channel 46, see figure 5. The inner channel 46 may comprise a lower end, e.g. a cylindrical recess 47 configured to receive a spring 48. A plunger 49 may be arranged within the channel 46 over the spring 48, partially surrounding it. The lever operated by the user may have or interact with an undulated surface defining e.g. through alternating valleys and peaks, a plurality of stable positions and unstable positions for the lever. The stable positions may correspond the different transmission modes or gears that a user may select. The spring may aid the user in selecting a transmission mode by making a transition from a stable to unstable position smoother, and facilitating the selection of the stable positions.

Figures 7A and 7B schematically illustrate a perspective view of an example of an inside of a top cover 34 for a gearshift device 1 for a vehicle transmission and a perspective view of an example of an inside and an outside of a top cover 34 for the gearshift device 1, respectively. Figure 8 schematically illustrate a perspective view of an inside of an example of a bottom cover 35 for a gearshift device 1 for a vehicle transmission. The top cover 34 of figures 7A and 7B may close the bottom cover 35 of figure 8 to form the housing 29 of figures 1B and 1C.

In some examples, the housing 29 may include a top cover 34 and a bottom cover 35, see e.g. figure 5. Prior art gearshift devices generally comprise two lateral covers joined by bolts, i.e. the two covers may be side by side. The lever 2 in those cases may be generally placed between the two lateral covers, such that both covers directly support the lever 2. But if instead of two side by side covers, a top cover 34 and a bottom cover 35 are provided, the lever 2 may be supported by a single cover. The position of the lever 2 may accordingly depend on a single cover only. This may be beneficial for an accurate movement of the lever 2 and of linked elements. The tolerances of the gearshift device 1 may also be more easily respected

Other prior art gearshift devices are known which comprise a bottom cover and a top cover, wherein a space to arrange the pivoting pin of the lever is created by both the top and bottom covers and thus suffers from disadvantages with respect to manufacturing tolerances.

For instance, as shown in the examples of figures 1A, 3and 5, the lever 2 may be supported by the top cover 34 only. In some examples, the lever 2 may be supported by opposite lateral walls of the top cover 34. In other examples, the top cover 34 may comprise a top cover rib or "inner wall" 36 and the lever 2 may be supported by the inner wall 36 and a lateral wall 37 of the top cover 34.

The lever 2 may comprise a wall receiving portion 38 for receiving wall 36, see e.g. figure 5. The wall receiving portion 38 may have a through-hole through which the top cover rib or "inner wall" 36 passes.

The wall receiving portion 38 may also comprise the opening 26 for receiving the gear selector end 6 of the sensor actuator 3, see e.g. figures 1A and 5. Still in other examples, the top cover 34 may comprise two ribs 36 extending towards an inside of the gearshift device 1, and the lever 2 may be placed between the two ribs and supported by them.

Regardless of where the opening 26 for receiving the gear selector end 6 of the sensor actuator 3 is in the lever 2 (for example, the lever or other gear selector 2 may not have a wall receiving portion 38 and the opening 26 may be elsewhere), the opening 26 may be provided in a portion of the gear selector near or close to the top cover 34. For example, as may be seen in the examples of figures 1A and 3, the opening 26 is provided relatively close to the upper side 45 of the top cover. This may help to have wider range of movement of the gear selector end 6 of the sensor actuator 3, and therefore of the sensor end 7 of the sensor actuator 3. I.e., the movement of the lever 2 may be multiplied by the sensor actuator 3.

The two elements configured to support the lever 2, e.g. the inner wall 36 and a sidewall 37 of the top cover 34, may have fitting holes 39, e.g. through holes, configured to receive a pivoting pin 40.

In some examples, the pivoting pin 40 may be integrated in the lever 2. This option is shown in figures 1A and 5. In other examples, the pivoting pin 40 and the lever 2 may be separate elements. The pivoting pin 40 being integrated (or not) in the lever 2 may be possible independently from the supporting elements to which the lever is rotatably connected, e.g. on one cover, two covers, a rib and a wall, two walls or two ribs. I.e., it is not limited to a type of housing 29 or to where the lever 2 is joined to the housing 29.

The lever 2 may be inserted into, e.g. clipped to, the inner wall 36 and the side wall 37 configured to support the lever 2. Therefore, fixing elements for securing the lever 2 to the top cover 34, such as screws or bushings, may be avoided.

The lever 2 may further comprise two lateral protrusions 41, see e.g. figure 5, to which the knob 31 may be attached, e.g. clipped. To this end, the handle 31 may comprise two ribs 67, see figure 5, which may be configured to be attached to the lateral protrusions 41 of the lever 2. The ribs 67 may be configured to laterally surround the top projections 30 of the lever 2.

The pivoting pin 40 may comprise two opposite pin ends 50, 51. Each pin end 50, 51 may be introduced in a corresponding fitting hole 39, see e.g. figures 1 and 5. In some examples, the supporting elements 36, 37 may comprise guiding recesses 57, see e.g. figures 7A and 7B, for guiding the pivoting ends 50, 51 of the pivoting pin 40 integrated in the lever 2 towards the fitting holes 39 of the lever supporting elements 36, 37 during assembly of the lever 2.

In some examples, a pin end 50, 51 may have a "cross" or "plus" shape, see figures 1A and 3. A substantially cross-shaped pin end may have four cross arms 52, 53, 54, 55 substantially perpendicular to each other. The cross arms 52-55 may be chamfered. This may reduce the risk of damaging the pin ends 50, 51 and the elements 36, 37 configured to support the lever 2 when mounting the lever 2 to the supporting elements 36, 37 comprising the fitting holes 39 for the lever 2. For example, if the lever 2 has to be rotated from a horizontal axis for pushing it upwards between the supporting elements 36, 37, the chamfered pin ends 50, 51 may facilitate the operation and reduce the risk of damaging during the pushing of the lever 2 and the subsequent fitting of the pin ends 50, 51 into the fitting holes 39. The inclined lever 2 may be moved into a horizontal position to introduce the pin ends 50, 51 in the holes 39 such that pin ends 50, 51 and holes 39 are aligned.

In some examples, the ends of the pivoting pin 40 may have an upper portion with more chamfer than a bottom portion of the pivoting pin. For example, a top arm 53 of a pin end 50, 51 may be more chamfered than a bottom arm 55 of the pin end 50, 51. In this case, a contact surface between the top arm 53 and a mating surface of the supporting element 36, 37 is smaller than a contact surface between the bottom arm 55 and a mating surface of the supporting element 36, 37. As the pivoting pin 40 of the lever 2 may be pushed downwards by the spring 48, an increased contact area between a surface of the bottom arm 55 and a mating surface of the corresponding supporting element 36, 37 may help to avoid wearing of the bottom arm 55.

Moving the knob 31, and therefore the lever 2, may lead to a small deformation of the top cover 34. The bottom cover 35 may be configured to provide stiffness to the top cover 34. Herein, providing stiffness or stiffening may be understood as limiting the deformation of the top cover 34, e.g. its movement in one or more directions. To do so, the bottom cover may comprise one or more stiffening elements 56, 61.

In some examples, one or more top cover ribs or inner walls 36 may be configured to be inserted into one or more receptacles 42, e.g. a through hole, of the bottom cover 35, e.g. a bottom cover base 43, see figure 8. The length of the rib(s) 36 may be adapted to this end. This may help to avoid undesired movements of the rib(s) 36 when the driver pushes or pulls the lever 2. The bottom cover 35 may for example comprise a receptable 42, e.g. in its base 43, configured to receive a rib 36 of the top cover 34.

In some examples, the top cover 34 may comprise a plurality of upper supports 58 for positioning the electronics support 4. These upper supports 58 in inside portions of the top cover 34 may help to arrange the electronics support 4, e.g. a Printed Circuit Board (PCB), at a desired height with respect to the top cover 34. The upper supports 58 may protrude from inside surfaces of the top cover 34, see figures 7A and 7B.

In some examples, the bottom cover 35 may comprise a base 43 and a perimetral flange 44 protruding from the base 43 towards an inside of the gearshift device 1. The perimetral flange 44 may completely surround the base 43 of the bottom cover 35 and may extend upwards. The top cover 34 may be fitted around the perimetral flange 44 of the bottom cover 35 in order to close the gearshift device 1. The base 43 of the bottom cover 35 may comprise a plurality of base ribs 56. The base ribs 56 may be provided on two opposite sides of the bottom cover 35, e.g. lateral sides, being substantially parallel to a pivoting axis 8. A lower portion of top cover 35 may be positioned between a base flange 44 and ribs 56 when the gearshift device 1 is closed. The ribs 56 can avoid or reduce outward deformation of the top cover.

In some examples, one or more portions of the perimetral flange 44 may comprise one or more protrusions or tabs 61. In the example of figure 8, each of the lateral portions 62 of the perimetral flange 44 comprises two tabs 61. The top cover 34 may comprise corresponding tab holes 63 for receiving the tabs 61 of the bottom cover 35. This can help to secure the top cover 34 to the bottom cover 35. A lateral portion or side of a cover 34, 35 may be herein understood as a portion or side of that cover substantially perpendicular to the pivoting axis 8 of the lever 2.

In some examples, the bottom cover 35 may comprise one or more columns 59 extending from the base 43, e.g. vertically upwards, see figure 8. One or more of the columns 59 may be configured to support one or more ribs 36 of the top cover 34. For example, a size, shape and position on the base 43 of a first column 60 may be chosen such that the first column 60 is able to limit or avoid a movement of the rib 36 in a certain direction when the knob 31 is moved. For instance, the first column 60 may be positioned adjacent to the rib 36, such that it retains the rib 36 in one or more directions, e.g. in a direction substantially parallel to the pivoting axis 8 of the lever 2 and/or in a direction substantially perpendicular to the pivoting axis 8 of the lever 2. One or more of the columns 59 may be configured to support the electronics support 4. Their size, shape and position on the base 43 of the bottom cover 35 may be adapted to this end. One or more columns 59 of the bottom cover 35 and the plurality of upper supports 58 of the top cover 34 may keep the electronics support 4 in place.

In some examples, the pivoting pin 40 of the lever 2 may be supported by the bottom cover 35 only. In these and other examples, the pivoting axis 40 may be arranged near the base 43 of the bottom cover 35. This can increase or maximize a distance between the pivoting axis 8 and an opening 26 for receiving the gear selector end 6 of the sensor actuator 3. This in turn may increase the angle through which the sensor actuator 3 is moved when the lever 2 is moved in examples wherein the axis of rotation 14 of the contact sensor 5 is substantially perpendicular to the pivoting axis 8.

Although only a number of examples have been disclosed herein, other alternatives, modifications, uses and/or equivalents thereof are possible, wherein the present invention is defined by the appended claims and should not be limited by the examples above.

## Claims

1. A gearshift device (1) for a vehicle transmission comprising:
a gear selector (2) operable by a user to control the vehicle transmission;
a sensor actuator (3);
an electronics support (4); and
a housing (29),
wherein the sensor actuator comprises a housing end (27), a gear selector end (6) and a sensor end (7), wherein the housing end (27) is configured to secure the sensor actuator (3) to the housing (29), and the gear selector end (6) is configured to be moved by the gear selector (2) such that the sensor actuator (3) rotates about a sensor actuator axis (13) when the gear selector (2) is operated by a user;
wherein the electronics support (4) comprises a sensor (5) including a fixed portion (10) with an opening and a movable portion (11) configured to rotate in the opening, wherein the movable portion (11) comprises a sensor contact surface (15);
wherein the sensor end (7) of the sensor actuator (3) is at least partially arranged within the opening of the sensor (5) and wherein the sensor end (7) is configured to rotate within the opening of the sensor (5) about the sensor actuator axis (13) and the sensor actuator axis (13) is defined between the housing end (27) and the sensor end (7) of the sensor actuator (3) in the opening of the sensor (5);
wherein the sensor end (7) of the sensor actuator comprises an actuator contact portion (12) configured to engage the sensor contact surface (15) and move the movable portion (11) of the sensor (5) when the sensor actuator (3) rotates about the sensor actuator axis (13); and
wherein one or more outer surfaces of the sensor end (7) configured to contact the sensor are curved in a plane containing the sensor actuator axis (13).

2. The gearshift device of claim 1, wherein the actuator contact portion (12) comprises a convex actuator contact surface (16).

3. The gearshift device of claim 2, wherein an edge of the sensor end (7) that is opposite to the actuator contact surface (16) is convex, and wherein a radius of curvature of the actuator contact surface (12) is different than a radius of curvature of the opposite edge (21).

4. The gearshift device of any of claims 1 - 3, wherein all the outer surfaces of the sensor end (7) configured to contact the sensor are curved in planes containing the sensor actuator axis (13).

5. The gearshift device of any of claims 1 - 4, wherein the actuator contact portion (12) comprises two or more contact points configured to engage the sensor contact surface (15).

6. The gearshift device of any of claims 1 - 5, wherein the sensor end (7) comprises a truncated disc, wherein the disc has a radius which is slightly smaller than a radius of the opening of the sensor.

7. The gearshift device of any of claims 1 - 6, wherein the sensor actuator comprises a shaft portion (32) between the gear selector end (6) and the sensor end (7).

8. The gearshift device of claim 7, wherein the sensor actuator (3) further comprises a web (33) for connecting the shaft portion (32) to the gear selector end (6).

9. The gearshift device of claim 7 or 8, wherein the sensor actuator (3) comprises a recess between the shaft portion (32) and the sensor end (7).

10. The gearshift device of any of claims 1 - 9, wherein the sensor comprises a potentiometer.

11. The gearshift device of any of claims 1 - 10, wherein the gear selector is a lever configured to rotate about a lever axis.

12. The gearshift device of claim 11, wherein the lever has an integrated pivoting pin configured to be arranged in the housing between a first and a second wall of the housing.

13. The gearshift device of claim 12, wherein the first wall is a sidewall of the housing and the second wall is an inner wall of the housing.

14. The gearshift device of claim 12 or 13, wherein the housing comprises a top cover, and a bottom cover, and wherein the top cover comprises the first and second walls.

15. The gearshift device of claim 14, wherein the bottom cover comprises a stiffening element configured to support the first wall or the second wall.

## Patentansprüche

1. Eine Schaltvorrichtung (1) für ein Fahrzeuggetriebe, die Folgendes umfasst:
einen Gangwahlschalter (2), der von einem Benutzer zur Steuerung des Fahrzeuggetriebes betätigt werden kann;
einen Sensoraktuator (3);
einen Elektronikträger (4); und
ein Gehäuse (29),
wobei der Sensoraktuator ein Gehäuseende (27), ein Gangwählerende (6) und ein Sensorende (7) umfasst, wobei das Gehäuseende (27) konfiguriert ist, um den Sensoraktuator (3) an dem Gehäuse (29) zu befestigen, und das Gangwählerende (6) konfiguriert ist, um durch den Gangwähler (2) so bewegt zu werden, dass sich der Sensoraktuator (3) um eine Sensoraktuatorachse (13) dreht, wenn der Gangwähler (2) durch einen Benutzer betätigt wird;
wobei der Elektronikträger (4) einen Sensor (5) umfasst, der einen festen Abschnitt (10) mit einer Öffnung und einen beweglichen Abschnitt (11) umfasst, der so konfiguriert ist, dass er sich in der Öffnung dreht, wobei der bewegliche Abschnitt (11) eine Sensorkontaktfläche (15) umfasst;
wobei das Sensorende (7) des Sensoraktuators (3) zumindest teilweise innerhalb der Öffnung des Sensors (5) angeordnet ist und wobei das Sensorende (7) dazu ausgebildet ist, sich innerhalb der Öffnung des Sensors (5) um die Sensoraktuatorachse (13) zu drehen und die Sensoraktuatorachse (13) zwischen dem Gehäuseende (27) und dem Sensorende (7) des Sensoraktors (3) in der Öffnung des Sensors (5) definiert ist;
wobei das Sensorende (7) des Sensoraktuators einen Aktuatorkontaktabschnitt (12) umfasst, der so konfiguriert ist, dass er mit der Sensorkontaktfläche (15) in Eingriff kommt und den beweglichen Abschnitt (11) des Sensors (5) bewegt, wenn sich der Sensoraktuator (3) um die Sensoraktuatorachse (13) dreht; und
wobei eine oder mehrere Außenflächen des Sensorendes (7), die so gestaltet sind, dass sie den Sensor berühren, in einer Ebene gekrümmt sind, die die Sensorbetätigungsachse (13) enthält.

2. Schaltvorrichtung nach Anspruch 1, wobei der Aktuatorkontaktabschnitt (12) eine konvexe Aktuatorkontaktfläche (16) aufweist.

3. Schaltvorrichtung nach Anspruch 2, wobei eine Kante des Sensorendes (7), die der Aktuatorkontaktfläche (16) gegenüberliegt, konvex ist, und wobei ein Krümmungsradius der Aktuatorkontaktfläche (12) anders ist als ein Krümmungsradius der gegenüberliegenden Kante (21).

4. Schaltvorrichtung nach einem der Ansprüche 1 bis 3, bei der alle Außenflächen des Sensorendes (7), die für den Kontakt mit dem Sensor ausgelegt sind, in Ebenen gekrümmt sind, die die Sensorbetätigungsachse (13) enthalten.

5. Schaltvorrichtung nach einem der Ansprüche 1 bis 4, wobei der AktuatorKontaktabschnitt (12) zwei oder mehr Kontaktpunkte aufweist, die so konfiguriert sind, dass sie mit der Sensorkontaktfläche (15) in Eingriff kommen.

6. Schaltvorrichtung nach einem der Ansprüche 1 bis 5, wobei das Sensorende (7) eine kegelstumpfförmige Scheibe aufweist, deren Radius geringfügig kleiner als der Radius der Öffnung des Sensors ist.

7. Schaltvorrichtung nach einem der Ansprüche 1 bis 6, wobei der Sensoraktuator einen Wellenabschnitt (32) zwischen dem Wählhebelende (6) und dem Sensorende (7) aufweist.

8. Schaltvorrichtung nach Anspruch 7, wobei der Sensoraktuator (3) ferner einen Steg (33) zum Verbinden des Wellenabschnitts (32) mit dem Wählhebelende (6) umfasst.

9. Schaltvorrichtung nach Anspruch 7 oder 8, wobei der Sensoraktuator (3) eine Aussparung zwischen dem Wellenteil (32) und dem Sensorende (7) aufweist.

10. Schaltvorrichtung nach einem der Ansprüche 1 bis 9, wobei der Sensor ein Potentiometer umfasst.

11. Schaltvorrichtung nach einem der Ansprüche 1 bis 10, wobei der Gangwähler ein Hebel ist, der um eine Hebelachse drehbar ist.

12. Schaltvorrichtung nach Anspruch 11, wobei der Hebel einen integrierten Drehzapfen aufweist, der so konfiguriert ist, dass er in dem Gehäuse zwischen einer ersten und einer zweiten Wand des Gehäuses angeordnet werden kann.

13. Schaltvorrichtung nach Anspruch 12, wobei die erste Wand eine Seitenwand des Gehäuses ist und die zweite Wand eine Innenwand des Gehäuses ist.

14. Schaltvorrichtung nach Anspruch 12 oder 13, wobei das Gehäuse eine obere Abdeckung und eine untere Abdeckung umfasst, und wobei die obere Abdeckung die erste und zweite Wand umfasst.

15. Schaltvorrichtung nach Anspruch 14, wobei die untere Abdeckung ein Versteifungselement umfasst, das so gestaltet ist, dass es die erste Wand oder die zweite Wand stützt.

## Revendications

1. Dispositif de changement de vitesse (1) pour une transmission de véhicule comprenant :
un sélecteur de vitesse (2) utilisable par un utilisateur pour contrôler la transmission du véhicule ;
un actionneur de capteur (3) ;
un support électronique (4) ; et
un boîtier (29),
dans lequel l'actionneur de capteur comprend une extrémité de boîtier (27), une extrémité de sélecteur de vitesse (6) et une extrémité de capteur (7), dans lequel l'extrémité de boîtier (27) est configurée pour fixer l'actionneur de capteur (3) au boîtier (29), et l'extrémité de sélecteur de vitesse (6) est configurée pour être déplacée par le sélecteur de vitesse (2) de manière à ce que l'actionneur de capteur (3) tourne autour d'un axe d'actionneur de capteur (13) lorsque le sélecteur de vitesse (2) est actionné par un utilisateur ;
dans lequel le support électronique (4) comprend un capteur (5) comprenant une partie fixe (10) avec une ouverture et une partie mobile (11) configurée pour tourner dans l'ouverture, dans lequel la partie mobile (11) comprend une surface de contact avec le capteur (15) ;
dans lequel l'extrémité du capteur (7) de l'actionneur de capteur (3) est au moins partiellement disposée dans l'ouverture du capteur (5) et dans lequel l'extrémité du capteur (7) est configurée pour tourner dans l'ouverture du capteur (5) autour de l'axe de l'actionneur de capteur (13) et l'axe de l'actionneur de capteur (13) est défini entre l'extrémité du boîtier (27) et l'extrémité du capteur (7) de l'actionneur de capteur (3) dans l'ouverture du capteur (5) ;
dans lequel l'extrémité du capteur (7) de l'actionneur du capteur comprend une partie de contact de l'actionneur (12) configurée pour s'engager dans la surface de contact du capteur (15) et déplacer la partie mobile (11) du capteur (5) lorsque l'actionneur du capteur (3) tourne autour de l'axe de l'actionneur du capteur (13) ; et
dans lequel une ou plusieurs surfaces extérieures de l'extrémité du capteur (7) configurée pour entrer en contact avec le capteur sont incurvées dans un plan contenant l'axe de l'actionneur du capteur (13).

2. Le dispositif de changement de vitesse de la revendication 1, dans lequel la partie de contact de l'actionneur (12) comprend une surface de contact d'actionneur convexe (16).

3. Le dispositif de changement de vitesse de la revendication 2, dans lequel un bord de l'extrémité du capteur (7) opposé à la surface de contact de l'actionneur (16) est convexe, et dans lequel un rayon de courbure de la surface de contact de l'actionneur (12) est différent d'un rayon de courbure du bord opposé (21).

4. Le dispositif de changement de vitesse de l'une des revendications 1 à 3, dans lequel toutes les surfaces extérieures de l'extrémité du capteur (7) configurées pour entrer en contact avec le capteur sont incurvées dans des plans contenant l'axe de l'actionneur du capteur (13).

5. Le dispositif de changement de vitesse de l'une des revendications 1 à 4, dans lequel la partie de contact de l'actionneur (12) comprend deux points de contact ou plus configurés pour s'engager dans la surface de contact du capteur (15).

6. Le dispositif de changement de vitesse de l'une des revendications 1 à 5, dans lequel l'extrémité du capteur (7) comprend un disque tronqué, le disque ayant un rayon légèrement inférieur au rayon de l'ouverture du capteur.

7. Le dispositif de changement de vitesse de l'une des revendications 1 à 6, dans lequel l'actionneur du capteur comprend une partie d'arbre (32) entre l'extrémité du sélecteur de vitesse (6) et l'extrémité du capteur (7).

8. Le dispositif de changement de vitesse de la revendication 7, dans lequel l'actionneur de capteur (3) comprend en outre une bande (33) pour relier la partie de l'arbre (32) à l'extrémité du sélecteur de vitesse (6).

9. Le dispositif de changement de vitesse de la revendication 7 ou 8, dans lequel l'actionneur de capteur (3) comprend un renfoncement entre la partie de l'arbre (32) et l'extrémité du capteur (7).

10. Le dispositif de changement de vitesse de l'une des revendications 1 à 9, dans lequel le capteur comprend un potentiomètre.

11. Le dispositif de changement de vitesse de l'une des revendications 1 à 10, dans lequel le sélecteur de vitesse est un levier configuré pour tourner autour d'un axe de levier.

12. Le dispositif de changement de vitesse de la revendication 11, dans lequel le levier comporte un axe de pivotement intégré configuré pour être disposé dans le boîtier entre une première et une seconde paroi du boîtier.

13. Le dispositif de changement de vitesse de la revendication 12, dans lequel la première paroi est une paroi latérale du boîtier et la deuxième paroi est une paroi intérieure du boîtier.

14. Le dispositif de changement de vitesse de la revendication 12 ou 13, dans lequel le boîtier comprend un couvercle supérieur et un couvercle inférieur, et dans lequel le couvercle supérieur comprend la première et la deuxième paroi.

15. Le dispositif de changement de vitesse de la revendication 14, dans lequel le couvercle inférieur comprend un élément raidisseur configuré pour soutenir la première paroi ou la deuxième paroi.
